# EUROPEAN PATENT APPLICATION

(11) **EP 2 505 860 A2**
(43) Date of publication of application: **03.10.2012**
(21) Application number: 12161625.4
(22) Date of filing: 27.03.2012
(51) Int. Cl.: F16D 1/108

(54) **Connection device for drive assembly**

(30) Priority: 31.03.2011 US 201113076476
(71) Applicant: Hamilton Sundstrand Corporation, Windsor Locks, CT 06096-1010 (US)
(72) Inventor: Lemmers Jr., Glenn C., Loves Park, IL Illinois 61111 (US)
(74) Representative: Tomlinson, Kerry John

(57) **Abstract**

A drive assembly includes first and second shafts (36,22). The second shaft has a bore (48) with internal splines (58). An input shaft (40) has first and second ends (42,44). The first end is coupled to the first shaft in a slip-fit relationship. The second end includes first splines (56) engaging the internal splines. A locking member (46) is supported by the second end. The locking member is moveable between insertion and secured positions. In one example, tightening a fastener (60) misaligns splines (63) on the locking member relative to the first splines. The secured position axially retains the input shaft to the second shaft. The insertion position is configured to permit installation of the second shaft into the bore, for example, with the splines aligned with one another.

## Description

### BACKGROUND

This disclosure relates to a connection device for a drive assembly. In one example, the disclosure relates to an input shaft used to couple a gearbox and an auxiliary device, such as a generator.

Gas turbine engines for aircraft typically include a gearbox that rotationally drives one or more auxiliary devices. One such auxiliary device that is commonly driven by a gearbox is a generator. It is desirable to disconnect the generator from the gearbox in the event of a generator failure so that the gearbox is not damaged. One typical disconnect device is a clutch arranged between a journal shaft of the generator and a rotor shaft.

The journal shaft is typically supported relative to the generator housing by one or more bearings. The input shaft is typically rigidly supported by the journal bearing, for example as an integral part, such that when the clutch disconnects the rotor shaft from the journal shaft, the generator bearings still are significantly loaded by the continued rotation of the input shaft by the gearbox. This can lead to premature bearing wear and failure from the lack of lubrication from the generator, which is not rotationally driven.

### SUMMARY

A connection device includes a first member having first splines. A second member includes a locking feature and is supported relative to the first member. The first splines and the locking feature are circumferentially aligned with one another in an insertion position. A stop is provided between the first and second members to provide a secured position in which the first splines and locking feature are circumferentially misaligned with one another. A fastening element interconnects and retains the first and second members in the secured position.

A drive assembly includes first and second shafts. The second shaft has a bore with internal splines. An input shaft has first and second ends. The first end is coupled to the first shaft in a slip-fit relationship. The second end includes first splines engaging the internal splines. A locking member is supported by the second end. The locking member is moveable between insertion and secured positions. The secured position axially retains the input shaft to the second shaft. The insertion position is configured to permit installation of the second shaft into the bore.

A method of making a connection includes inserting a connection device having first and second members into a splined bore of a shaft. A fastener is tightened to connect the first and second members to one another. The second member rotates relative to the first member in response to the tightening step. A locking feature on the second member is misaligned relative to a locating feature on the shaft in response to the rotating step to axially retain the connection device to the shaft.

### BRIEF DESCRIPTION OF THE DRAWINGS

The disclosure can be further understood by reference to the following detailed description when considered in connection with the accompanying drawings wherein:
Figure 1 is a schematic view of an auxiliary device mounted to a gearbox and rotationally coupled to one another with a connection device.
Figure 2 is an exploded partial perspective view of the gearbox and the connection device in an installation position.
Figure 3A is a cross-sectional view of the connection device coupling first and second shafts to one another.
Figure 3B is a perspective partial cross-sectional view of the connection device secured to a drive shaft.
Figure 4A is a perspective view of a first member of the connection device.
Figure 4B is a perspective view of a second member of the connection device.
Figure 4C is an end view of the first and second members in a secured position.
Figure 5 is a cross-sectional view of another example of the connection device when used as a plug.

### DETAILED DESCRIPTION

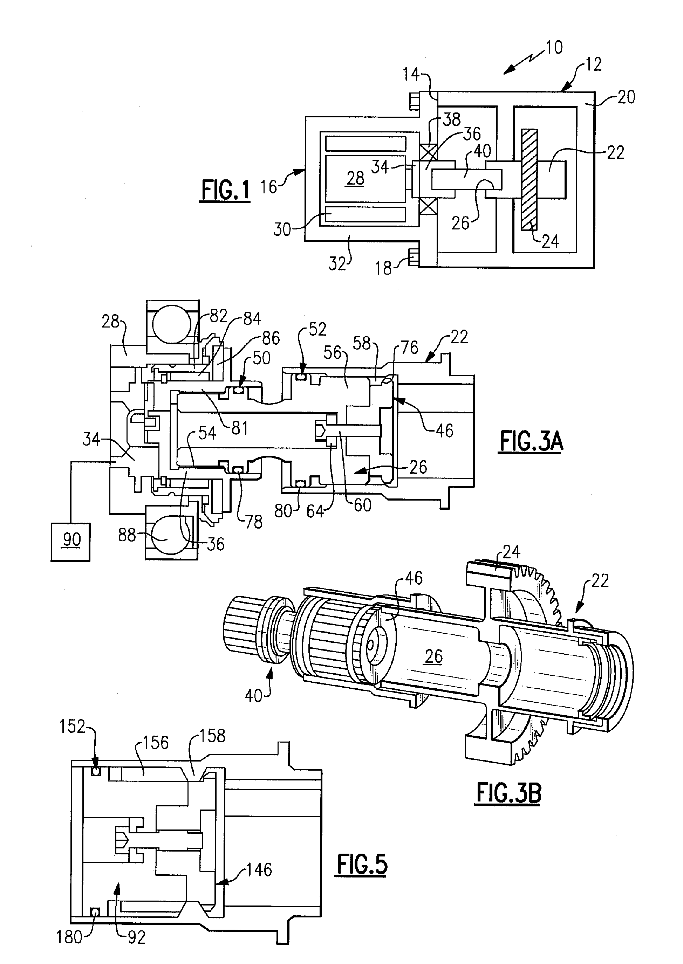

A drive assembly 10 is illustrated in Figure 1. The drive assembly 10 includes an auxiliary device, such as a generator 16, secured to a mounting pad 14 of a gearbox 12 using fasteners 18. The gearbox 12 includes a gearbox housing 20 enclosing a gear train that includes a drive shaft 22 having a gear 24. An input shaft 40 is received in and splined to a bore 26 of the drive shaft 22 and is interconnected to a journal shaft 36 of the generator 16.

The generator 16 includes a rotor shaft 28 selectively connected to the journal shaft 36 via a disconnect device, such as a clutch 34. The journal shaft 36 is rotationally supported within a generator housing 32 by a bearing 38. A stator 30 is arranged within the generator housing 32 and generates electrical current in response to the rotational drive imparted to the rotor 28 from the gearbox 12 through an input shaft 40.

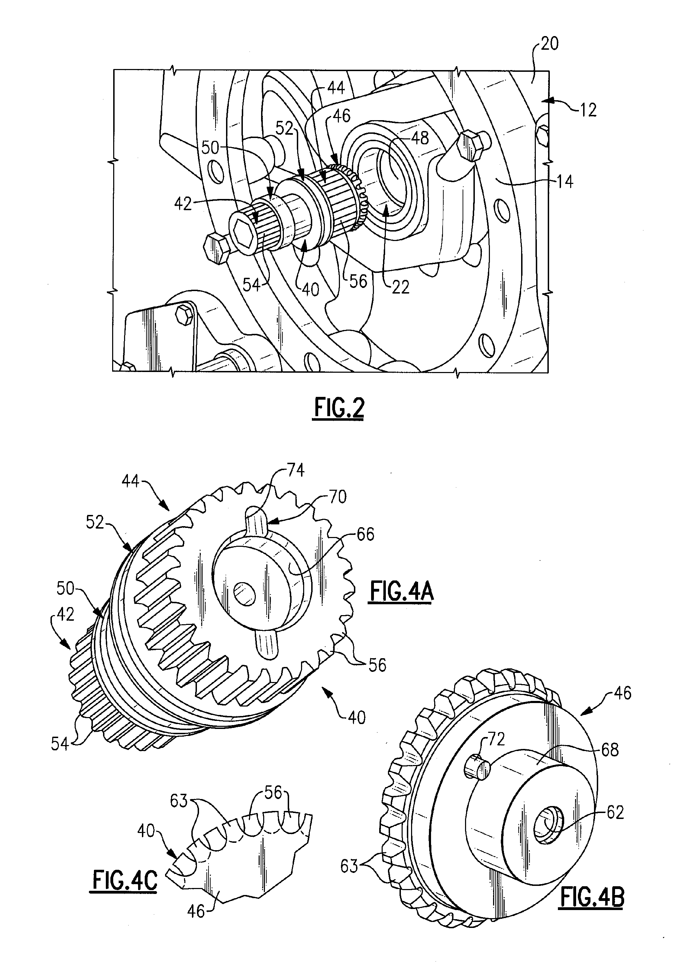

The input shaft 40 is shown in more detail in Figures 2-4B. The input shaft 40 includes first and second ends 42, 44 that respectively mate with splines (respectively shown at 81 and 58 in Figure 3A) provided on the journal and drive shafts 36, 22. The first and second ends 42, 44 also respectively include first and second splines 54, 56 having respectively adjacent first and second annular grooves 50, 52. The annular grooves 50, 52 support seals 78, 80 that seal the input shaft 40 to the journal and drive shafts 36, 22 to retain generator and gearbox lubrication in their respective housings.

A locking member 46 includes a protrusion 68 that is received in a corresponding recess 66 in the second end 44. The locking member 46 includes a threaded hole 62. A fastening element 60, such as a bolt with a washer 64, is threadingly received in the threaded hole 62 to secure the locking member 46 to the second end 44. One or more notches 70 (two shown in the example) are provided on the second end 44. Corresponding pins 72 extend from the locking feature 46 and are received in the notches 70.

The locking member 46 includes a locking feature 63 that is provided by splines of a similar configuration to those of the second splines 56, for example. The locking member 46 has an insertion position (Figure 2) in which the second splines 56 are circumferentially aligned with the locking feature 63 such that the input shaft 40 can be inserted into the bore 48, intermeshing with the internal splines 58. The locking member 46 is rotatable from the insertion position to a secured position (Figure 4C) in which the locking feature 63 is misaligned with the second splines 56. In the example, the friction between the fastening element 60 and threaded hole 62 rotates the locking member 46 as the fastening element 60 is tightened.

The secured position axially retains the input shaft 40 to the drive shaft 22. Referring to Figure 3A, the internal splines 58 provide an edge 76 against which the locking feature 63 abuts in the secured position. The notch 70 provides a surface 74 that acts as a stop to prevent the locking member 46 from being rotated to a position in which the second splines 56 and locking feature 63 again become aligned with one another during tightening of the fastening element 60.

With continuing reference to Figure 3A, the first end 42 is coupled to the journal shaft 36 in a slip fit relationship with engaging first splines 54 and internal journal splines 81. A rotor shaft bearing 88 supports the rotor shaft 28. The bearing 38 (Figure 1) includes radial and axial carbon bearings 84, 86 located by a retainer 82. An actuator 90 operates the clutch 34, which disconnects the rotor shaft 28 from the journal shaft 36. Without rotation of the rotor shaft 28, lubrication to the bearing 38 is greatly reduced.

The second end 44 is axially secured to and supported by the drive shaft 22 rather than on the journal shaft 36. As a result, the typically large loads on the bearings 84, 86 following generator disconnect can be significantly reduced.

The drive shaft 22 is hollow such that lubrication within the gearbox 12 is conveyed through this hollow shaft. The connection device can be used also as a plug 92 if desired, as illustrated in Figure 5, to permit continued use of the gearbox 12 with the generator 16 removed. The plug 92 includes a body with splines 156 that mesh with the internal splines 158. The body also includes an annular groove 152 that supports a seal 180 that seals lubrication within the drive shaft 22. A locking member 146 is misaligned after insertion of the body into the drive shaft 22, as described above.

Although an example embodiment has been disclosed, a worker of ordinary skill in this art would recognize that certain modifications would come within the scope of the claims. For that reason, the following claims should be studied to determine their true scope and content.

## Claims

1. A connection device comprising:
a first member (40) having first splines (56);
a second member (46) having a locking feature (63) and being supported relative to the first member, the first splines and the locking feature being circumferentially aligned with one another in an insertion position;
a stop (76) provided between the first and second members providing a secured position in which the first splines and locking feature are circumferentially misaligned with one another; and
a fastening element (60) interconnecting and retaining the first and second members in the secured position.

2. The connection device according to claim 1, wherein the locking feature (63) includes second splines (58).

3. The connection device according to claim 1 or 2, wherein one of the first and second members (40,46) includes a protrusion (68), and the other of the first and second members includes a recess (66) receiving the protrusion for rotationally supporting the one of the first and second members.

4. The connection device according to claim 1, 2 or 3, wherein one of the first and second members (40,46) includes a notch (70) and the other of the first and second members includes a pin (72) received in the notch, the pin and notch cooperating with one another to limit relative rotation of the first and second members in the secured position in response to rotation of the fastening element; preferably wherein the fastening element (60) includes a bolt and the second member includes a threaded hole (62) receiving the bolt.

5. The connection device according to any preceding claim, wherein the first member (40) includes an annular groove (50,52) having a seal (78,80).

6. The connection device according to any preceding claim, comprising a shaft (22) including a bore (48) having internal splines (58) providing an edge (76), the first splines (56) engaging the internal splines (58), and the locking feature (63) engaging the edge in the secured position to axially secure the first member (40) to the shaft (22).

7. A drive assembly comprising:
the connection device according to any preceding claim; and
a first shaft (36) and second shaft (22), the second shaft having a bore (48) with internal splines (58);
wherein said first member (40) is an input shaft having first and second ends (42,44), the first end (42) being coupled to the first shaft (36) in a slip fit relationship, and the second end (44) includes first splines (56) engaging the internal splines (58); and
wherein said second member (46) is a locking member supported by the second end (44), the locking member (46) being movable between insertion and secured positions, the secured position axially retaining the input shaft (40) to the second shaft (22), and the insertion position being configured to permit installation of the second end (44) into the bore (48).

8. The drive assembly according to claim 7, comprising an auxiliary device including the first shaft (36), and a gearbox (12) supporting the auxiliary device and including the second shaft (22); preferably wherein the auxiliary device is a gearbox.

9. The drive assembly according to claim 8, wherein the first shaft (36) is a journal shaft supported within the auxiliary device by a bearing (84,86); preferably wherein the drive assembly comprises a disconnect device (34) interconnecting a rotor shaft (28) to the journal shaft (36).

10. The drive assembly according to claim 7, 8 or 9, wherein the second shaft (22) is a drive shaft with a gear (24), and the second end (44) includes an annular groove (50,52) supporting a seal (78,80).

11. The drive assembly according to claim 7, 8, 9 or 10, wherein the locking feature (63) includes second splines engaging an edge (76) of the internal splines (58) in the secured position to axially secure the input shaft (40) to the second shaft (22).

12. A method of making a connection comprising:
inserting a connection device including first and second members (40,46) into a splined bore (48) of a shaft (22);
tightening a fastener (60) connecting the first and second members to one another;
rotating the second member relative to the first member in response to the tightening step; and
misaligning a locking feature (63) on the second member relative to a locating feature on the shaft in response to the rotating step to axially retain the connection device to the shaft.

13. The method according to claim 12, wherein the first and second members (40,46) respectively include first and second splines (56,63) that are circumferentially aligned during the inserting step and misaligned during the misaligning step.

14. The method according to claim 12 or 13, wherein the locating feature includes an edge (78) of the splined bore (48).

15. The method according to claim 12, 13 or 14, wherein the inserting step includes sealing the first member relative to the shaft.
